# EUROPEAN PATENT APPLICATION

(11) **EP 4 629 129 A1**
(43) Date of publication of application: **08.10.2025**
(21) Application number: 25161966.4
(22) Date of filing: 05.03.2025
(51) Int. Cl.: G06F 30/392, H01L 23/528, H10D 89/10, G06F 119/06

(54) **INTEGRATED CIRCUIT INCLUDING HIGH-POWER CONSUMPTION CELL AND METHOD OF MANUFACTURING THE SAME**

(30) Priority: 02.04.2024 KR 20240044786; 28.06.2024 KR 20240085505
(71) Applicant: Samsung Electronics Co., Ltd., Suwon-si, Gyeonggi-do 16677 (KR)
(72) Inventor: LEE, Woonki, 16677 Suwon-si (KR); KIM, Hyunjoong, 16677 Suwon-si (KR); SHIN, Seongyong, 16677 Suwon-si (KR); CHOI, Inyoung, 16677 Suwon-si (KR)
(74) Representative: Marks & Clerk LLP

(57) **Abstract**

An integrated circuit includes standard cells, first power lines extending in a first direction and providing a first power supply voltage to the standard cells, and second power lines extending in the first direction and providing a second power supply voltage to the standard cells, the first power lines and the second power lines being interleaved alternately in a second direction that is perpendicular to the first direction to define a rows between adjacent ones of the first and second power lines. The standard cells include first function cells arranged in first rows, extending in the first direction, and performing a first function using the first power supply voltage and the second power supply voltage, and other standard cells other than the first function cells are arranged in second rows among the rows.

## Description

### BACKGROUND

Apparatuses, devices, and method consistent with the present disclosure relate to an integrated circuit, and more particularly, to an integrated circuit including dispersively placed high-power consumption cells, and a method of manufacturing the integrated circuit.

A stable power supply is required to improve the performance of integrated circuits. Standard cells in an integrated circuit may operate based on power supplied via a power delivery network. The power consumed by the plurality of standard cells that share a single power line may cause voltage drops on the power line. Various methods are being studied to prevent voltage drops.

### SUMMARY

It is an aspect to provide an integrated circuit in which high-power consumption cells are dispersively placed to reduce voltage drops in the power line, and a method of manufacturing the integrated circuit.

According to an aspect of one or more embodiments, there is provided an integrated circuit comprising a plurality of standard cells; a plurality of first power lines extending in a first direction and configured to provide a first power supply voltage to the plurality of standard cells; and a plurality of second power lines extending in the first direction and configured to provide a second power supply voltage to the plurality of standard cells, the plurality of first power lines and the plurality of second power lines being interleaved alternately in a second direction that is perpendicular to the first direction to define a plurality of rows between adjacent ones of the plurality of first power lines and the plurality of second power lines. The plurality of standard cells comprise a plurality of first function cells, the plurality of first function cells are arranged in first rows among the plurality of rows, extend in the first direction, and are configured to perform a first function using the first power supply voltage and the second power supply voltage, and at least some other standard cells other than the plurality of first function cells among the plurality of standard cells are arranged in second rows among the plurality of rows.

According to another aspect of one or more embodiments, there is provided an integrated circuit comprising a plurality of standard cells; a plurality of first power lines extending in a first direction and configured to provide a first power supply voltage to the plurality of standard cells; and a plurality of second power lines extending in the first direction and configured to provide a second power supply voltage to the plurality of standard cells, the plurality of first power lines and the plurality of second power lines being interleaved alternately in a second direction that is perpendicular to the first direction to define a plurality of rows between adjacent ones of the plurality of first power lines and the plurality of second power lines. The plurality of standard cells comprise a plurality of first function cells, the plurality of first function cells are arranged in first rows among the plurality of rows and are configured to perform a first function using the first power supply voltage and the second power supply voltage, and at least some other standard cells other than the plurality of first function cells among the plurality of standard cells are arranged in second rows among the plurality of rows.

According to another aspect of one or more embodiments, there is provided a method of manufacturing an integrated circuit, the method comprising obtaining input data defining the integrated circuit, the integrated circuit comprising a plurality of standard cells; arranging block cells among the plurality of standard cells in first rows among a plurality of rows extending in a first direction, the block cells being spaced apart from each other by a first distance; arranging first function cells among the plurality of standard cells in second rows among the plurality of rows, each of the first function cells being configured to perform a first function and having a length in the first direction that is greater than or equal to the first distance; arranging, in the plurality of rows, remaining standard cells other than the block cells and the first function cells among the plurality of standard cells; and generating output data defining a layout comprising the plurality of standard cells that have been arranged.

According to yet another aspect of the one or more embodiments, there is provided an integrated circuit comprising a plurality of standard cells; a plurality of first power lines extending in a first direction and configured to provide a first power supply voltage to the plurality of standard cells; and a plurality of second power lines and configured to provide a second power supply voltage to the plurality of standard cells, the plurality of first power lines and the plurality of second power lines being interleaved alternately to define a plurality of first rows and a plurality of second rows between adjacent ones of the plurality of first power lines and the plurality of second power lines, the plurality of first rows alternating with the plurality of second rows. The plurality of standard cells comprise first standard cells, each having a length in the first direction that is less than a reference length in the first direction and second standard cells, each having a length greater or equal to the reference length, the first standard cells are arranged in the plurality of first rows and the plurality of second rows, and the second standard cells are arranged in the plurality of first rows.

According to still yet another aspect of one or more embodiments, there is provided a method of manufacturing an integrated circuit, the method comprising obtaining input data defining the integrated circuit, the integrated circuit comprising a plurality of standard cells; arranging placement constraint areas in first rows among a plurality of rows extending in a first direction, the placement constraint areas being spaced apart from each other by a first distance; arranging first function cells among the plurality of standard cells in the plurality of rows, each of the first function cells being configured to perform a first function and having a length in the first direction that is greater than or equal to the first distance in the first direction; removing the placement constraint areas from the first rows; arranging, in the plurality of rows, remaining standard cells other than the first function cells among the plurality of standard cells; and generating output data defining a layout comprising the plurality of standard cells that have been arranged.

The following features may apply to any of the above described embodiments.

The first direction and second direction may be perpendicular to one another. The first direction may be perpendicular to the third direction. The first direction may be perpendicular to the second direction.

The first power supply voltage may be a positive power supply voltage (VDD). The second power supply voltage may be a negative power supply voltage (VSS).

Each of the plurality of first function cells may associated with higher power consumption than each of the at least some other standard cells.

In some embodiments, the plurality of first power lines and the plurality of second power lines are interleaved alternately to define a plurality of the first rows and a plurality of the second rows between adjacent ones of the plurality of first power lines and the plurality of second power lines, the plurality of the first rows alternating with the plurality of the second rows, wherein the plurality of standard cells comprise first standard cells, each having a length in the first direction that is less than a reference length in the first direction and second standard cells, each having a length greater or equal to the reference length, the first standard cells including the other standard cells and the second standard cells including the first function cells, wherein the first standard cells are arranged in the plurality of the first rows and the plurality of the second rows, and wherein the second standard cells are arranged in the plurality of the first rows. The second standard cells may be associated with a higher power consumption than the first standard cells.

In some embodiments, the plurality of first function cells may be a first plurality of first function cells belonging to a first region of the integrated circuit. The integrated circuit may further comprise a second region of the integrated circuit comprising a second plurality of first function cells, each being configured to perform the first function. The power lines (and hence the rows) may extend through both first and second regions. Whilst the first plurality of first function cells may be arranged in the first rows in the first region, the second plurality of first functions cells may be arranged in the second rows within the second region. At least some other standard cells in the second region may be arranged in the first rows within the second region. Within the first region, at least one of the first rows comprises more than one of the first function cells. Within the second region, at least one of the second rows comprises more than one of the first function cells.

At least some of the above and other features of the invention are set out in the claims.

### BRIEF DESCRIPTION OF THE DRAWINGS

Various embodiments will be more clearly understood from the following detailed description taken in conjunction with the accompanying drawings, in which:
FIG. 1 is a diagram illustrating an integrated circuit according to an embodiment;
FIG. 2 is a diagram illustrating an integrated circuit according to an embodiment;
FIGS. 3A and 3B are diagrams each illustrating an integrated circuit according to some embodiments;
FIG. 4 is a diagram illustrating an integrated circuit operating in a normal operation mode and a scan test mode, according to some embodiments;
FIGS. 5A and 5B are circuit diagrams illustrating a scan flip-flop according to an embodiment;
FIG. 6 is a cross-sectional view illustrating a wiring layer according to an embodiment;
FIG. 7 is a diagram illustrating an integrated circuit according to an embodiment;
FIGS. 8A to 8D are diagrams showing examples of devices according to some embodiments;
FIG. 9 is a flowchart showing a method of manufacturing an integrated circuit, according to an embodiment;
FIG. 10 is a flowchart showing a method of manufacturing an integrated circuit, according to an embodiment;
FIG. 11 is a flowchart showing a method of manufacturing an integrated circuit, according to an embodiment;
FIG. 12 is a block diagram showing a system-on-chip according to an embodiment; and
FIG. 13 is a block diagram showing a computing system including a memory for storing a program, according to an embodiment.

### DETAILED DESCRIPTION

Hereinafter, various embodiments are described in detail with reference to the accompanying drawings.

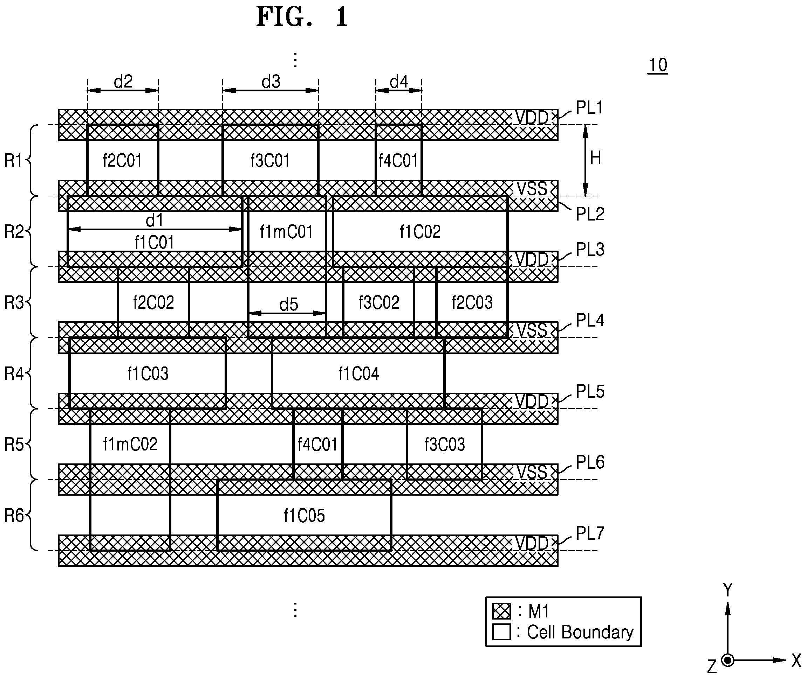

FIG. 1 is a diagram of an integrated circuit according to an embodiment.

FIG. 1 is a plan view showing an integrated circuit 10 including a plurality of cells f1C01 to f1C05, f1mC01 to f1mC02, f2C01 to f2C03, f3C01 to f3C03, and f4C01 to f4C02 in a plane formed by an X-axis and a Y-axis. In the specification, the X-axis direction and the Y-axis direction may be referred to as a first direction and a second direction, respectively, and a Z-axis direction may be referred to as a vertical direction. A component that is positioned in the +Z direction relative to another component may be referred to as being above the another component, and a component that is positioned in the -Z direction relative to another component may be referred to as being below the another component. Also, as used in this specification, the term "height" may refer to a length in the Y-axis direction. For example, the height of a component may be referred to as the length of the component in the Y-axis direction.

The cells f1C01 to f1C05, f1mC01 to f1mC02, f2C01 to f2C03, f3C01 to f3C03, and f4C01 to f4C02 may be placed in a first row R1, a second row R2, a third row R3, a fourth row R4, a fifth row R5, and a sixth row R6. The first to sixth rows R1 to R6 may extend in the first direction and may each have a height H. The number of rows in the integrated circuit 10 is not limited to six as illustrated in the example of FIG. 1 and, in some embodiments, the heights of at least two rows in the integrated circuit 10 may be different from each other. A cell is a unit of layout in an integrated circuit, and may be designed to perform a predefined function and may also be referred to as a standard cell. The integrated circuit 10 may include a number of different cells, and the cells may be placed in the first to sixth rows R1 to R6. The cells f1C01 to f1C05, f2C01 to f2C03, f3C01 to f3C03, and f4C01 to f4C02 may include single height cells placed in one row, and the cells f1mC01 to flmC02 may include multi height cells placed in two or more rows.

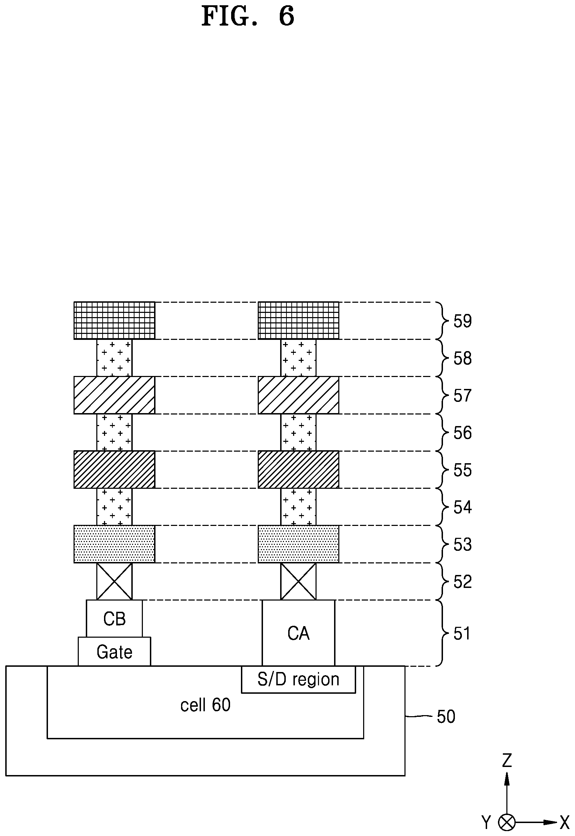

A first power line PL1, a second power line PL2, a third power line PL3, a fourth power line PL4, a fifth power line PL5, a sixth power line PL6, and a seventh power line PL7 may be placed on boundaries of the first to sixth rows R1 to R6. For example, as illustrated in the example of FIG. 1, the first power line PL1 may be placed at an upper boundary of the first row R1, the second power line PL2 may be placed between the first row R1 and the second row R2 (i.e., at a lower boundary of the first row R1 and an upper boundary of the second row R2), the third power line PL3 may be placed between the second row R2 and the third row R3 (i.e., at a lower boundary of the second row R2 and an upper boundary of the third row R3), and so forth. The first to seventh power lines PL1 to PL7 may be formed in an M1 wiring layer (e.g., a layer denoted by 53 in FIG. 6).

The first, third, fifth, and seventh power lines PL1, PL3, PL5, and PL7 and the second, fourth, and sixth power lines PL2, PL4, and PL6 may be placed alternately with each other in the second direction. In an embodiment, the first, third, fifth, and seventh power lines PL1, PL3, PL5, and PL7 may provide positive power supply voltage VDD to the cells. The second, fourth, and sixth power lines PL2, PL4, and PL6 may provide negative power supply voltage VSS to the cells.

The cells f1C01 to f1C05 performing a first function and having a first length d1 in the first direction may be placed in the second, fourth, and sixth rows R2, R4, and R6. However, embodiments are not limited thereto and, in some embodiments, the cells f1C01 to f1C05 may be placed in the first, third, and fifth rows R1, R3, and R5. That is, the cells f1C01 to f1C05 may be placed in odd rows or even rows. In some embodiments, the cells f1C01 to f1C05 may be placed in only odd rows or in only even rows. The cells f1C01 to f1C05 are relatively large cells and may consume relatively large amounts of power. The cells f1C01 to f1C05 may be referred to as high-power consumption cells or high-power consumption single height cells. The cells f1C01 to f1C05 may include relatively many transistors and may include relatively many gate electrodes. The cells f1C01 to f1C05 may include flip-flop cells. The first function may represent the ability to store at least one bit according to a clock signal. However, embodiments are not limited thereto, and the cells f1C01 to f1C05 may include clock gating cells or clock buffer cells. The clock gating cell may block a clock signal to reduce power consumption of the integrated circuit 10. The clock gating cell may include transistors corresponding to flip-flops and transistors corresponding to a logic operation circuits. The clock buffer cell may delay a clock signal to generate a delayed clock signal. The clock buffer cell may include transistors corresponding to at least one amplifier circuit that amplifies a clock signal.

The cells f1mC01 to f1mC02 performing the first function and having a fifth length d5 in the first direction may be placed continuously in two or more rows. That is, the cells f1mC01 and f1mC02 may be placed in two or more rows such that the cells f1mC01 and f1mC02 span two adjacent rows and cover the two adjacent rows. Specifically, the cell f1mC01 may be placed continuously in the second and third rows R2 and R3 (i.e., to span the second and third rows R2 and R3), and the cell f1mC02 may be placed continuously in the fifth and sixth rows R5 and R6 (i.e., to span the fifth and sixth rows R5 and R6). The cells f1mC01 to f1mC02 are relatively large cells and may consume relatively large amounts of power. The cells f1mC01 to f1mC02 may be referred to as high-power consumption multi height cells. The cells f1mC01 to f1mC02 may include relatively many transistors and/or may include relatively many gate electrodes. The cells f1mC01 to f1mC02 may include flip-flop cells.

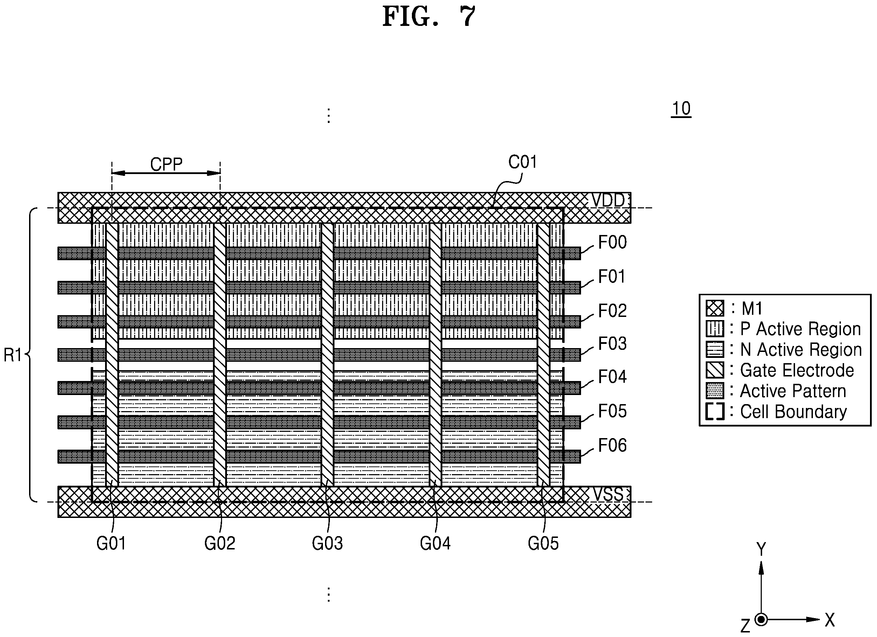

The cells f2C01 to f2C03 having a second length d2 in the first direction, the cells f3C01 to f3C03 having a third length d3 in the first direction, and the cells f4C01 to f4C02 having a fourth length d4 in the first direction may be placed in the first, third, and fifth rows R1, R3, and R5. The cells f2C01 to f2C03, f3C01 to f3C03, and f4C01 to f4C02 are relatively small cells and may consume relatively little power. The cells f2C01 to f2C03, f3C01 to f3C03, and f4C01 to f4C02 may be referred to as low-power consumption cells. The cells f2C01 to f2C03, f3C01 to f3C03, and f4C01 to f4C02 may include relatively few transistors and/or may include relatively few gate electrodes. The cells f2C01 to f2C03, f3C01 to f3C03, and f4C01 to f4C02 may include logic cells or non-logic cells, such as decap cells, filler cells, and/or well tap cells, but embodiments are not limited thereto. The logic cell may input and output data via input pins and output pins. The decap cell may serve as a capacitor connected between a power line providing the positive power supply voltage VDD and a power line providing the negative power supply voltage VSS to prevent voltage drops in the power lines. The filler cell may be located in a region, in which other standard cells are not placed, of an integrated circuit 10. The well tap cell may connect a power line, providing the positive power supply voltage VDD, to a P-type active region (see FIG. 7) and connect a power line, providing the negative power supply voltage VSS, to an N-type active region (see FIG. 7).

In an embodiment, the high-power consumption multi height cells may be placed continuously in two or more rows (i.e., to span two or more rows). The cell f1mC01 is placed spanning the second and third rows R2 and R3 and may thus receive the negative power supply voltage VSS from the second and fourth power lines PL2 and PL4. That is, one high-power consumption multi height cell may be connected to power lines that provide two or more negative power supply voltages VSS or to power lines that provide two or more positive power supply voltages VDD. Accordingly, a relatively small voltage drop may be induced in one power line compared to the high-power consumption single height cell.

In an embodiment, the high-power consumption single height cells may be placed in non-consecutive rows, and thus, the high-power consumption single height cells may be dispersively placed. Unlike the high-power consumption multi height cell, the high-power consumption single height cell is connected to one power line that provides the positive power supply voltage VDD and one power line that provides the negative power supply voltage VSS. Accordingly, a relatively large voltage drop may be induced on one power line compared to the high-power consumption multi height cell.

According to some embodiments, the high-power consumption single height cells are placed in only one of two adjacent rows and are not placed in two rows that are adjacent to each other, and thus, a relatively small number of high-power consumption single height cells may share the first to seventh power lines PL1 to PL7. Therefore, limitations related to the voltage drop on power lines due to the high-power consumption single height cells may be resolved, and the power integrity and performance of integrated circuit 10 may be improved.

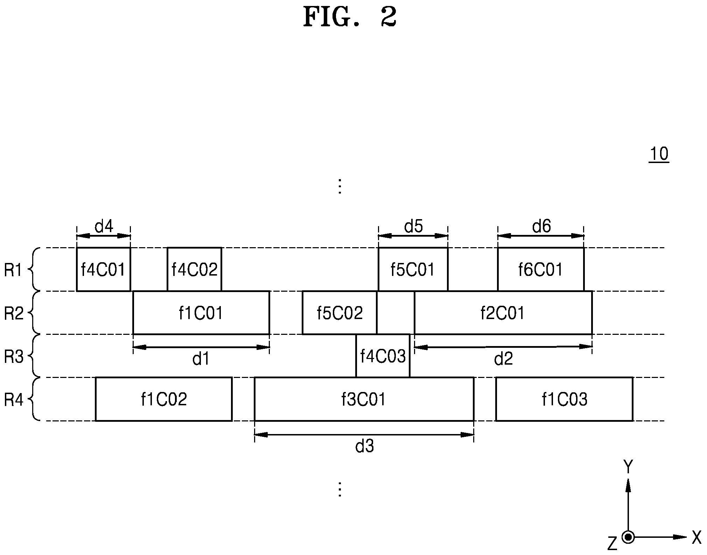

FIG. 2 is a diagram illustrating an integrated circuit according to an embodiment.

Referring to FIG. 2, in the integrated circuit 10, cells f1C01 to f1C03, f2C01, f3C01, f4C01 to f4C03, f5C01 to f5C02, and f6C01 may be placed in first to fourth rows R1 to R4 extending in the first direction.

The cells f1C01 to f1C03 may have a length d1 in the first direction, the cell f2C01 may have a length d2 in the first direction, the cell f3C01 may have a length d3 in the first direction, the cells f4C01 to f4C03 may have a length d4 in the first direction, the cells f5C01 to f5C02 may have a length d5 in the first direction, and the cell f6C01 may have a length d6 in the first direction. The lengths d1, d2, and d3 may be greater than a reference length, and the lengths d4, d5, and d6 may be less than the reference length.

The cells f1C01 to f1C03, f2C01, and f3C01 having the length greater than the reference length are not placed in the first and third rows R1 and R3, but may be placed in the second or fourth rows R2 or R4. The cells f1C01 to f1C03, f2C01, and f3C01 may consume relatively large amounts of power. The cells f1C01 to f1C03, f2C01, and f3C01 may include relatively many transistors. The cells f1C01 to f1C03, f2C01, and f3C01 may include relatively many gate electrodes. The cells f1C01 to f1C03, f2C01, and f3C01 may correspond to the high-power consumption single height cells described above with reference to FIG. 1. The cells f1C01 to f1C03, f2C01, and f3C01 may correspond to the second standard cells.

The cells f4C01 to f4C03, f5C01 to f5C02, and f6C01 having the length less than the reference length may be placed in any of the first to fourth rows R1 to R4. The cells f4C01 to f4C03, f5C01 to f5C02, and f6C01 may consume relatively little power. The cells f4C01 to f4C03, f5C01 to f5C02, and f6C01 may include relatively few transistors. The cells f4C01 to f4C03, f5C01 to f5C02, and f6C01 may include relatively few gate electrodes. The cells f4C01 to f4C03, f5C01 to f5C02, and f6C01 may correspond to the low-power consumption cell described above with reference to FIG. 1. The cells f4C01 to f4C03, f5C01 to f5C02, and f6C01 may correspond to the first standard cells.

In an embodiment, the high-power consumption single height cells are placed in only one of two adjacent rows and are not placed in two rows that are adjacent to each other, and thus, the high-power consumption single height cells may be dispersively placed. One power line may provide power supply voltage to the relatively small number of high-power consumption single height cells. Accordingly, the limitations related to the voltage drop of power lines may be resolved, and the power integrity and performance of integrated circuit 10 may be improved.

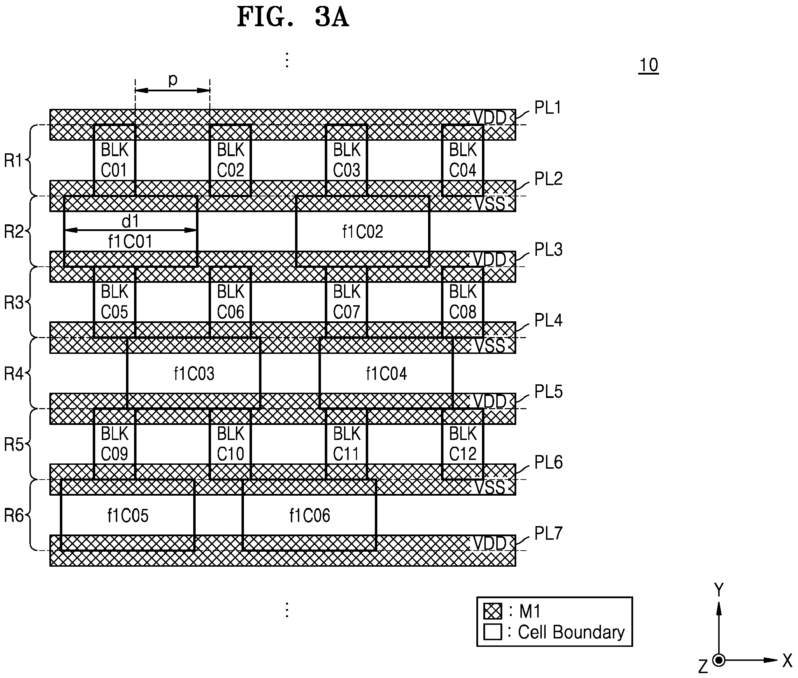

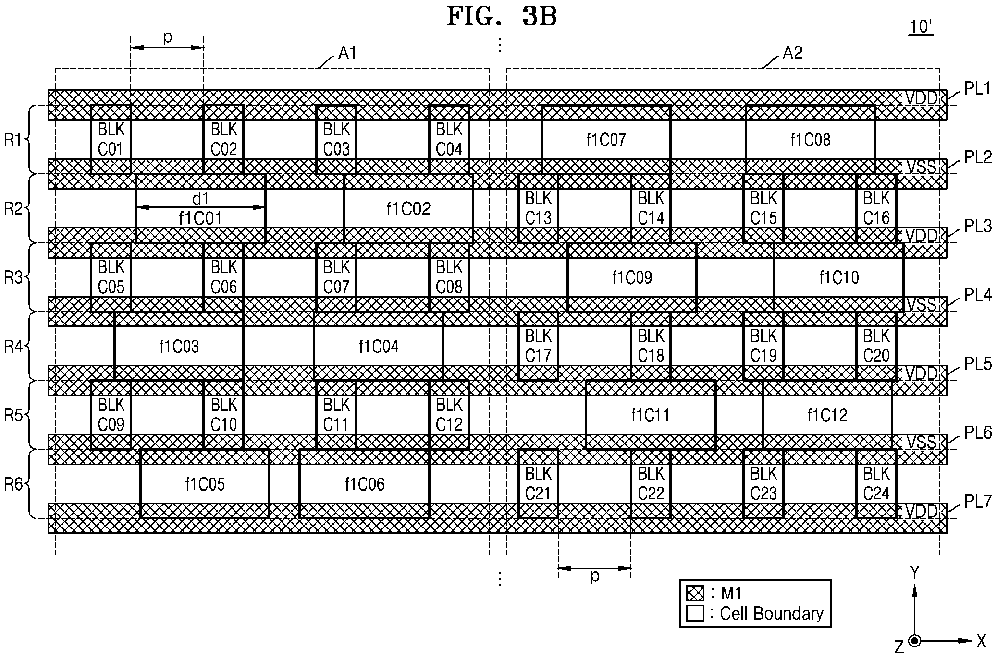

FIGS. 3A and 3B are diagrams illustrating integrated circuits 10 and 10' according to some embodiments.

Referring to FIG. 3A, the integrated circuit 10 may include first to twelfth block cells BLKC01 to BLKC12 and first function cells f1C01 to f1C06, which are placed in first to sixth rows R1 to R6.

The first to twelfth block cells BLKC01 to BLKC12 may be identical to or different from each other. The first to twelfth block cells BLKC01 to BLKC12 may be placed in the first, third, and fifth rows R1, R3, and R5. Neighboring block cells in a row may be spaced apart from each other by a distance p in the first direction. For example, the first block cell BLKC01 may be spaced apart from the second block cell BLKC02 by the distance p and the second block cell BLKC02 may be spaced apart from the third block cell BLKC03 by the distance p, and so on. Similarly, the fifth block cell BLKC05 may be spaced apart from the sixth block cell BLKC06 by the distance p, and so on. The first to twelfth block cells BLKC01 to BLKC12 are placed in the integrated circuit 10 earlier than the first function cells f1C01 to f1C06 and may thus hinder the first function cells f1C01 to f1C06 from being placed in the first, third, and fifth rows R1, R3, and R5. The first to twelfth block cells BLKC01 to BLKC12 may correspond to the low-power consumption cell of FIG. 1. That is, the first to twelfth block cells BLKC01 to BLKC12 may consume less power than the first function cells f1C01 to f1C06. Each of the first to twelfth block cells BLKC01 to BLKC12 may correspond to one of the decap cell, filler cell, and well tap cell described above with reference to FIG. 1.

The first function cells f1C01 to f1C06 may perform a first function and have a length d1 in the first direction. The first function cells f1C01 to f1C06 may correspond to the high-power consumption single height cells of FIG. 1. In some embodiments, the first function cells f1C01 to f1C06 may perform different functions.

Although only the first to twelfth block cells BLKC01 to BLKC12 and the first function cells f1C01 to f1C06 are illustrated in FIG. 3A, the integrated circuit 10 may further include standard cells having various functions. The block cells BLKC01 to BLKC12 may correspond to first standard cells, where the first function cells f1C01 to f1C06 may correspond to second standard cells.

The first to twelfth block cells BLKC01 to BLKC12 are placed in the first, third, and fifth rows R1, R3, and R5 with a distance p in the first direction that is less than the length d1. Subsequently, standard cells other than the first to twelfth block cells BLKC01 to BLKC12 may be placed in the first to sixth rows R1 to R6. The standard cells having a length in the first direction that is less than the distance p may be placed in the first to sixth rows R1 to R6, and the standard cells having a length in the first direction that is greater than the distance p may be placed only in the second, fourth, and sixth rows R2, R4, and R6. Therefore, the first function cells f1C01 to f1C06 may be placed only in the second, fourth, and sixth rows R2, R4, and R6.

In some embodiments, the integrated circuit 10 may include multi height cells which are placed across two or more rows and have the length in the first direction that is less than the distance p. Since the length of each of the multi height cells in the first direction is shorter than the distance p, the multi height cells may also be placed in the first, third, and fifth rows R1, R3, and R5.

According to an embodiment, the first to twelfth block cells BLKC01 to BLKC12 may be placed at the distance p that is less than the length d1 of the first function cells f1C01 to f1C06, thereby preventing the first function cells f1C01 to f1C06 from being placed in two adjacent rows. Since the high-power consumption single height cells are placed in only one of two adjacent rows and not in two rows that are adjacent to each other, the high-power consumption single height cells may be dispersively placed. One power line may provide power supply voltage to the relatively small number of high-power consumption single height cells. Accordingly, the limitations related to the voltage drop of power lines may be resolved, and the power integrity and performance of integrated circuit 10 may be improved.

Referring to FIG. 3B, an integrated circuit 10' may include a first region A1 and a second region A2. The first region A1 may represent a region in which first to twelfth block cells BLKC01 to BLKC12 are placed in odd rows, that is, in first, third, and fifth rows R1, R3, and R5. The second region A2 may represent a region in which thirteenth to twenty-fourth block cells BLKC13 to BLKC24 are placed in even rows, that is, in second, fourth, and sixth rows R2, R4, and R6. First function cells f1C01 to f1C12 that perform a first function and have a length d1 in the first direction may be placed in the first and second regions A1 and A2. Specifically, the first function cells f1C01 to f1C06 may be placed in the first region A1, and the first function cells f1C07 to f1C12 may be placed in the second region A2. Although not shown, standard cells other than the first to twelfth block cells BLKC01 to BLKC12 and the first function cells f1C01 to f1C12 may also be placed in the first and second regions A1 and A2.

The distance in the first direction between adjacent block cells in a row may be the distance p. Since the length d1 of each of the first function cells f1C01 to f1C06 in the first direction is greater than the distance p in the first direction, the first function cells f1C01 to f1C06 may be placed in even rows, i.e., in the second, fourth, and sixth rows R2, R4, and R6 in the first region A1. That is, in some embodiments, since the length d1 is greater than the distance p, the first function cells f1C01 to f1C06 may be placed only in even rows, i.e., in the second, fourth, and sixth rows R2, R4, and R6 in the first region A1, and are prevented from being placed in rows having the block cells. The first function cells f1C07 to f1C12 may be placed only in odd rows, i.e., in the first, third, and fifth rows R1, R3, and R5 in the second region A2.

As shown in FIG. 3B, the integrated circuit 10' includes a region in which the high-power consumption single height cells are placed in odd rows and a region in which the high-power consumption single height cells are placed in even rows. Accordingly, the high degree of design freedom may be achieved.

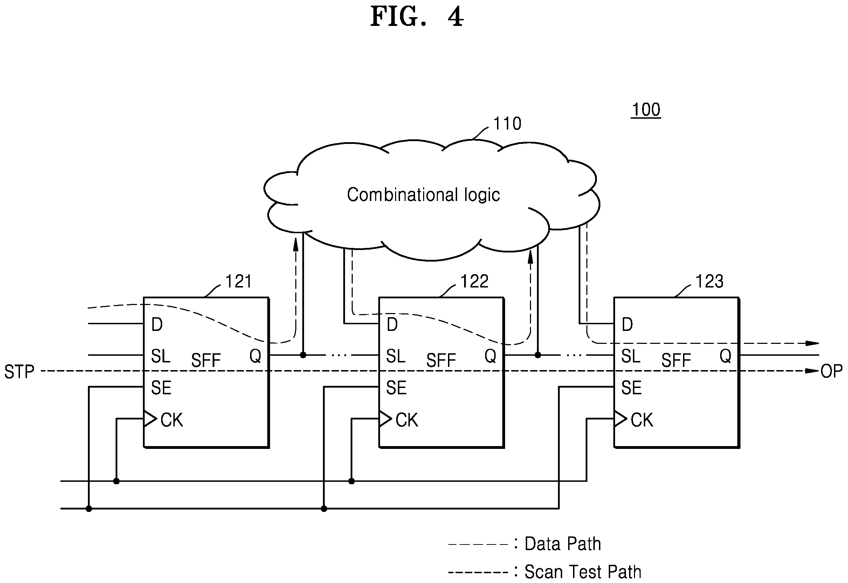

FIG. 4 is a diagram illustrating an integrated circuit operating in normal operation mode and scan test mode, according to some embodiments.

Referring to FIG. 4, an integrated circuit 100 may include a combinational logic circuit 110 and a plurality of scan flip-flops 121, 122, and 123.

The combinational logic circuit 110 may include a circuit that outputs the same output data each time the same input data is input a plurality of times. The combinational logic circuit 110 may include various logic circuits, and each of the logic circuits may correspond to the low-power consumption cell of FIGS. 1 to 3. However, embodiments are not limited thereto and, in some embodiments, each of the logic circuits may correspond to the high-power consumption single height cell or the high-power consumption multi height cell of FIGS. 1 to 3.

Each of the plurality of scan flip-flops 121, 122, and 123 may include a sequential logic circuit. The sequential logic circuit may include a circuit with a memory device. The sequential logic circuit may include a circuit that outputs different output data depending on memory states each time the same input data is input a plurality of times. The number of scan flip-flops 121, 122, and 123 in the integrated circuit 100 is not limited to the number illustrated in FIG. 4 and, in some embodiments, a greater or lesser number of scan flip-flops may be provided. Each of the plurality of scan flip-flops 121, 122, and 123 may correspond to the high-power consumption single height cell or the high-power consumption multi height cell described with reference to FIGS. 1 to 3. However, embodiments are not limited thereto. The high-power consumption single height cell or the high-power consumption multi height cell may not only correspond to various types of flip-flops, but also represent function cells that consume power with a power consumption value greater than or equal to a reference value.

When a scan enable signal SE indicates the normal operation mode, data may be transmitted along a data path, and the function of the integrated circuit 100 may be performed by the combinational logic circuit 110. When the scan enable signal SE indicates the scan test mode, data may be transmitted along a scan test path, and a scan test operation may be performed. In the scan test operation, errors occurring in a plurality of scan flip-flops 121, 122, and 123 may be identified by comparing a scan test pattern STP to an output pattern OP. The scan test pattern STP may include an input bit string, and the output pattern OP may include an output bit string corresponding to the scan test pattern STP.

In the scan test mode, since the plurality of flip-flops 121, 122, and 123 located in the scan test path operate simultaneously, a voltage drop on the power lines may occur due to the power consumed by the plurality of flip-flops 121, 122, and 123. In an embodiment, the flip-flops are placed in only one of two adjacent rows, and thus, the number of flip-flops sharing one power line may be reduced. Accordingly, the limitations related to the voltage drop of power lines may be resolved, and the power integrity and performance of integrated circuit 10 may be improved.

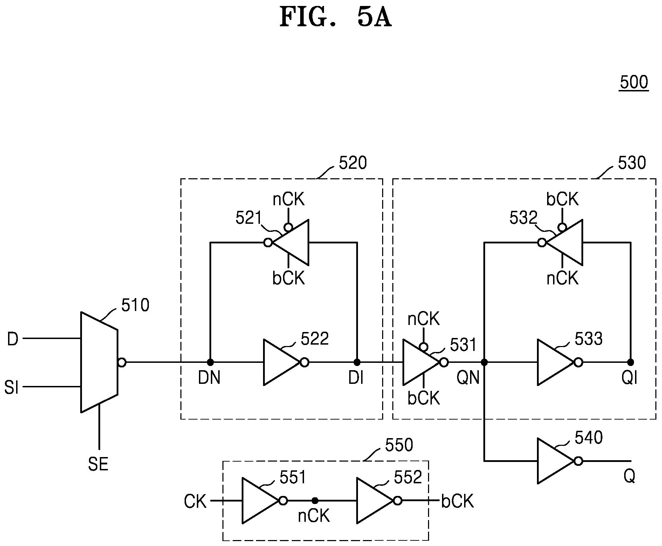

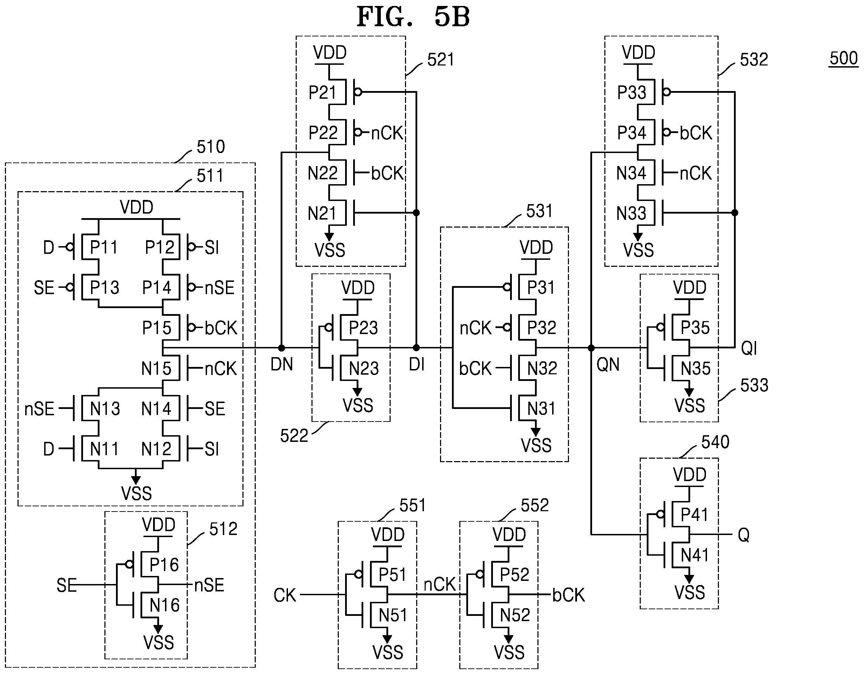

FIGS. 5A and 5B are circuit diagrams illustrating a scan flip-flop according to some embodiments.

Referring to FIG. 5A, a scan flip-flop 500 may include a selection circuit 510, a master latch circuit 520, a slave latch circuit 530, an output circuit 540, and a clock buffer 550.

The selection circuit 510 may select one of a data signal D and a scan input signal SI on the basis of the scan enable signal SE, invert the selected signal, and output the inverted signal to a DN node.

The master latch circuit 520 may store, in a DI node, the signal of the DN node on the basis of an inverted clock signal nCK and a buffered clock signal bCK. The master latch circuit 520 may include a first three-phase inverter 521 and a first inverter 522. The first three-phase inverter 521 may invert the signal of the DI node and provide the inverted signal to the DN node. The first three-phase inverter 521 may precharge the DN node on the basis of the inverted clock signal nCK and discharge the DN node on the basis of the buffered clock signal bCK. The first inverter 522 may invert the signal of the DN node and provide the inverted signal to the DI node.

The slave latch circuit 530 may store, in a QN node and a QI node, the signal of the DI node on the basis of an inverted clock signal nCK and a buffered clock signal bCK. The slave latch circuit 530 may include a second three-phase inverter 531, a third three-phase inverter 532, and a second inverter 533. The second three-phase inverter 531 may invert the signal of the DI node and provide the inverted signal to the QN node. The second three-phase inverter 531 may precharge the QN node on the basis of the inverted clock signal nCK and discharge the QN node on the basis of the buffered clock signal bCK. The second inverter 533 may invert the signal of the QN node and provide the inverted signal to the QI node. The third three-phase inverter 532 may invert the signal of the QI node and provide the inverted signal to the QN node. The third three-phase inverter 532 may precharge the QN node on the basis of the buffered clock signal bCK and discharge the QN node on the basis of the inverted clock signal nCK.

The output circuit 540 may invert the signal of the QN node to generate an output signal Q.

The clock buffer 550 may receive a clock signal CK and generate an inverted clock signal nCK and a buffered clock signal bCK. The clock buffer 550 may include a third inverter 551 and a fourth inverter 552. The third inverter 551 may generate the inverted clock signal nCK by inverting the clock signal CK, and the fourth inverter 552 may generate the buffered clock signal bCK by inverting the inverted clock signal nCK.

Referring to FIG. 5B, the selection circuit 510 may include a multiplexer 511 and a fifth inverter 512. The multiplexer 511 may selectively output a data signal D or a scan input signal SI on the basis of a scan enable signal SE and an inverted scan enable signal nSE. The multiplexer 511 may include P-type transistors P11 to P15 and N-type transistors N11 to N15. A gate terminal of the P-type transistor P11 may receive a data signal D, a gate terminal of the P-type transistor P12 may receive a scan input signal SI, a gate terminal of the P-type transistor P13 may receive a scan enable signal SE, a gate terminal of the P-type transistor P14 may receive an inverted scan enable signal nSE, and a gate terminal of the P-type transistor P15 may receive a buffered clock signal bCK. A gate terminal of the N-type transistor N11 may receive a data signal D, a gate terminal of the N-type transistor N12 may receive a scan input signal SI, a gate terminal of the N-type transistor N13 may receive an inverted scan enable signal nSE, a gate terminal of the N-type transistor N14 may receive a scan enable signal SE, and a gate terminal of the N-type transistor N15 may receive an inverted clock signal nCK. The fifth inverter 512 may invert a scan enable signal SE to generate an inverted scan enable signal nSE. The fifth inverter 512 may include a P-type transistor P16 and an N-type transistor N16.

A first three-phase inverter 521 may include P-type transistors P21 and P22 and N-type transistors N21 and N22. A gate terminal of the P-type transistor P21 may be connected to a DI node, and a gate terminal of the P-type transistor P22 may receive an inverted clock signal nCK. A gate terminal of the N-type transistor N21 may be connected to the DI node, and a gate terminal of the N-type transistor N22 may receive a buffered clock signal bCK. A first inverter 522 may include a P-type transistor P23 and an N-type transistor N23 of which gate terminals are connected to a DN node.

A second three-phase inverter 531 may include P-type transistors P31 and P32 and N-type transistors N31 and N32. A gate terminal of the P-type transistor P31 may be connected to the DI node, and a gate terminal of the P-type transistor P32 may receive an inverted clock signal nCK. A gate terminal of the N-type transistor N31 may be connected to the DI node, and a gate terminal of the N-type transistor N32 may receive a buffered clock signal bCK. A third three-phase inverter 532 may include P-type transistors P33 and P34 and N-type transistors N33 and N34. A gate terminal of the P-type transistor P33 may be connected to the QI node, and a gate terminal of the P-type transistor P34 may receive a buffered clock signal bCK. A gate terminal of the N-type transistor N33 may be connected to the QI node, and a gate terminal of the N-type transistor N34 may receive an inverted clock signal nCK. A second inverter 533 may include a P-type transistor P35 and an N-type transistor N35 of which gate terminals are connected to a QN node.

An output circuit 540 may have an inverter structure including a P-type transistor P41 and an N-type transistor N41 of which gate terminals are connected to the QN node.

A third inverter 551 may include a P-type transistor P51 and an N-type transistor N51 of which gate terminals receive a clock signal CK, and a fourth inverter 552 may include a P-type transistor P52 and an N-type transistor N52 of which gate terminals receive an inverted clock signal nCK.

Referring to FIG. 5B, one end of each of the P-type transistors P11, P12, P16, P21, P23, P31, P33, P35, P41, P51, and P52 may be connected to a power line providing a positive power supply voltage VDD. One end of each of the N-type transistors N11, N12, N16, N21, N23, N31, N33, N35, N41, N51, and N52 may be connected to a power line providing a negative power supply voltage VSS. Since the transistors in the scan flip-flop 500 are driven based on the power provided from the power lines, the voltage drop of the power lines induced by the scan flip-flop 500 may be large compared to a circuit with a relatively simple structure.

In some embodiments, the low-power consumption cell of FIGS. 1 to 3 may include fewer transistors than the number of transistors in the scan flip-flop 500. However, embodiments are not limited thereto. In some embodiments, the low-power consumption cell may include less than a reference number of transistors, and the high-power consumption single height cell or the high-power consumption multi height cell may include more than the reference number of transistors.

FIG. 6 is a cross-sectional view illustrating a wiring layer according to an embodiment.

Referring to FIG. 6, a plurality of wiring layers 51 to 59 (or referred to as the first to ninth wiring layers 51 to 59) may be formed on a substrate 50. A standard cell 60 may be formed on the substrate 50. FIG. 6 is a cross-sectional view illustrating only the plurality of wiring layers 51 to 59 formed on the standard cell 60 and may differ from the cross-sectional view of an actual integrated circuit (for example, of the integrated circuit 10).

The first wiring layer 51 may be referred to as a contact layer and have a gate contact CB connected to a gate electrode of a transistor and a source/drain contact CA connected to a source/drain region S/D region of the transistor. The first wiring layer 51 may be referred to as an M0 layer, and the standard cell 60 and the first wiring layer 51 may be formed by an front end-of-line (FEOL) process.

The second wiring layer 52 may be referred to as a contact via layer and may also be referred to as a V0 layer. The third wiring layer 53 may be referred to as an M1 layer. The fourth wiring layer 54 may be referred to as a V1 layer. The fifth wiring layer 55 may be referred to as an M2 layer. The sixth wiring layer 56 may be referred to as a V2 layer. The seventh wiring layer 57 may be referred to as an M3 layer. The eighth wiring layer 58 may be referred to as a V3 layer. The ninth wiring layer 59 may be referred to as an M4 layer. The second to ninth wiring layers 52 to 59 may be formed by a back end-of-line (BEOL) process. However, embodiments are not limited thereto and, in some embodiments, at least one of the second to ninth wiring layers 52 to 59 may be formed by the FEOL process. Only nine wiring layers are shown in FIG. 6, but embodiments are not limited thereto. In the diagrams of the specification, only some wiring layers may be shown for convenience of illustration.

In the specification, only a power line extending in the first direction from the third wiring layer 53, i.e., the M1 layer, is described by way of illustration. However, embodiments are not limited thereto. For example, in some embodiments, a power line extending in the second direction in the fifth wiring layer 55, i.e., the M2 layer, may be connected to the power line extending in the first direction in the M1 layer through vias in the fourth wiring layer 54, thereby forming a power mesh.

FIG. 7 is a diagram illustrating an integrated circuit according to an embodiment.

Referring to FIG. 7, in the integrated circuit 10, a cell C01 placed in a first row R1 may include active regions extending in the first direction. Although only the first row R1 and cell C01 are illustrated in FIG. 7, the number of rows and cells in the integrated circuit 10 are not limited thereto.

The cell C01 may include a P-type active region in which a P-type transistor is formed and an N-type active region in which an N-type transistor is formed.

The cell C01 may further include active patterns F00 to F06 extending in the first direction and gate electrodes G01 to G05 extending in the second direction. The gate electrodes G01 to G05 may be spaced apart from each other by a distance CPP. In some embodiments, the P-type and N-type active regions may include semiconductors, such as Si and/or Ge, or compound semiconductors, such as SiGe, SiC, GaAs, InAs, and/or InP, and may also include conductive regions, such as a well doped with impurities and/or a structure doped with impurities. In some embodiments, the gate electrodes G01 to G05 may include a work function metal-containing layer and a gap-fill metal film. For example, the work function metal-containing layer may include at least one metal among Ti, W, Ru, Nb, Mo, Hf, Ni, Co, Pt, Yb, Tb, Dy, Er, and Pd, and the gap-fill metal film may include a W film or an Al film. In some embodiments, the gate electrodes G01 to G05 may include a stack structure of TiAlC/TiN/W, a stack structure of TiN/TaN/TiAlC/TiN/W, or a stack structure of TiN/TaN/TiN/TiAlC/TiN/W. It can be understood that the embodiments described above may be applied not only to cells including planar transistors but also may be applied to cells including fin-type field effect transistors (FinFETs).

In FIGS. 1 to 3, the number of gate electrodes in the low-power consumption cells may be less than the number of gate electrodes in the high-power consumption cells. In

FIGS. 1 to 3, the number of active patterns in the low-power consumption cells may be less than the number of active patterns in the high-power consumption cells.

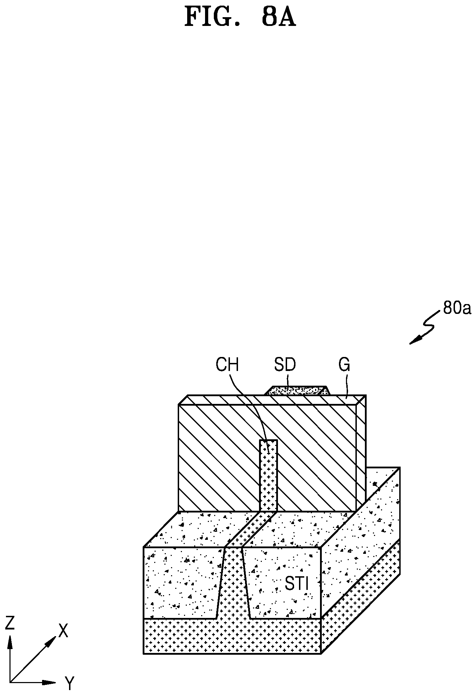

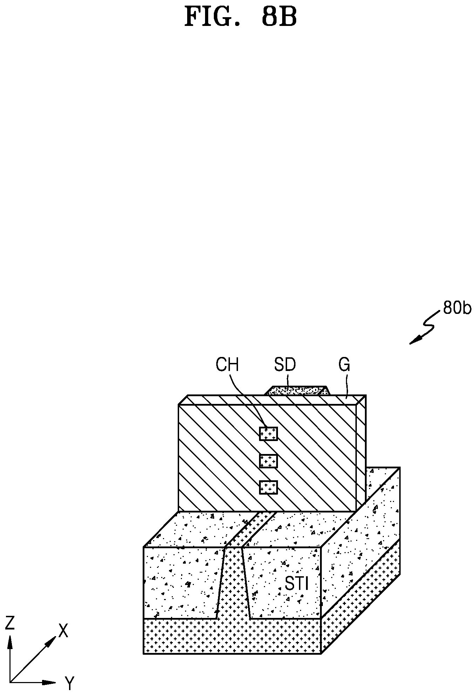

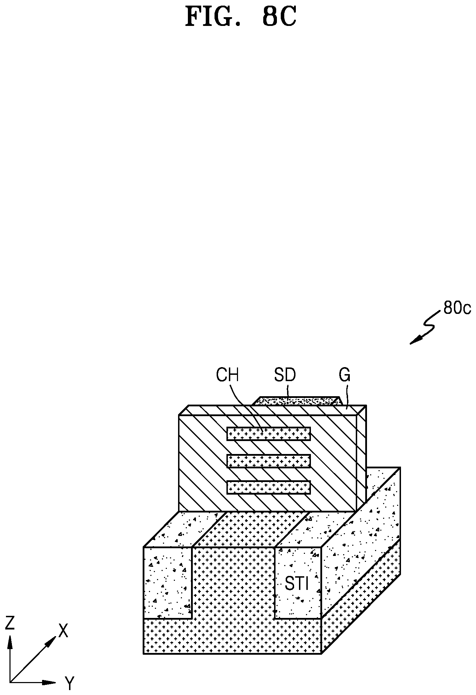

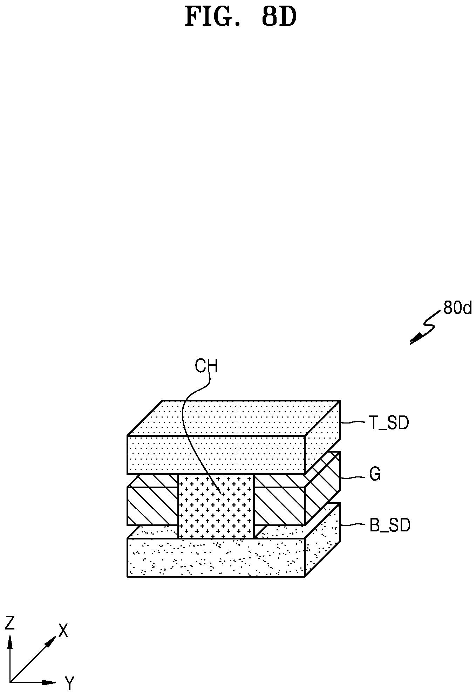

FIGS. 8A to 8D are diagrams showing examples of devices according to some embodiments. For example, FIG. 8A shows a FinFET 80a, FIG. 8B shows a gate-all-around field effect transistor (GAAFET) 80b, FIG. 8C shows a multi-bridge channel field effect transistor (MBCFET) 80c, and FIG. 8D shows a vertical field effect transistor (VFET) 80d. The devices of FIGS. 8A to 8D may belong to a standard cell. For convenience of illustration, FIGS. 8A to 8C illustrate a state in which one of the two source/drain regions is removed, and FIG. 8D illustrates a cross-section of the VFET 80d taken along a plane parallel to the plane formed by an Y-axis and a Z-axis and passing through a channel CH of the VFET 80d.

Referring to FIG. 8A, the FinFET 80a may be formed by a fin-shaped active pattern extending in the first direction between shallow trench isolations STIs and a gate electrode G extending in the second direction. Source/drain regions SD may be formed on both sides of the gate electrode G, and thus, a source and a drain may be spaced apart from each other in the first direction. An insulating film may be formed between the channel CH and the gate electrode G. In some embodiments, the FinFET 80a may be formed by the plurality of active patterns and the gate electrode G, which are spaced apart from each other in the second direction.

Referring to FIG. 8B, the GAAFET 80b may be formed by active patterns, i.e., nanowires, extending in the first direction and spaced apart from each other in the vertical direction, and a gate electrode G extending in the second direction. Source/drain regions SD may be formed on both sides of the gate electrode G, and thus, a source and a drain may be spaced apart from each other in the first direction. An insulating film may be formed between the channel CH and the gate electrode G. It is noted that the number of nanowires in the GAAFET 80b is not limited to the number shown in FIG. 8B.

Referring to FIG. 8C, the MBCFET 80c may be formed by active patterns, i.e., nanosheets, extending in the first direction and spaced apart from each other in the vertical direction, and a gate electrode G extending in the second direction. Source/drain regions SD may be formed on both sides of the gate electrode G, and thus, a source and a drain may be spaced apart from each other in the second direction. An insulating film may be formed between the channel CH and the gate electrode G. It is noted that the number of nanosheets in the MBCFET 80c is not limited to the number shown in FIG. 8C.

Referring to FIG. 8D, the VFET 80d may include a top source/drain T_SD and a bottom source/drain B_SD which are spaced apart from each other in the vertical direction with a channel CH therebetween. The VFET 80d may include a gate electrode G that surrounds the perimeter of a channel CH between the top source/drain T_SD and the bottom source/drain B_SD. An insulating film may be formed between the channel CH and the gate electrode G.

It is noted that devices in the integrated circuit 10 are not limited to the examples of FIGS. 8A to 8D. For example, in some embodiments, the integrated circuit 10 may include a ForkFET in which a dielectric wall isolates nanosheets for a P-type transistor from nanosheets for an N-type transistor, thereby forming a structure in which the N-type transistor is close to the P-type transistor. In some embodiments, the integrated circuit 10 may include a bipolar junction transistor as well as FETs, such as a complementary FET (CFET), a negative CFET (NCFET), and a carbon nanotube (CNT) FET.

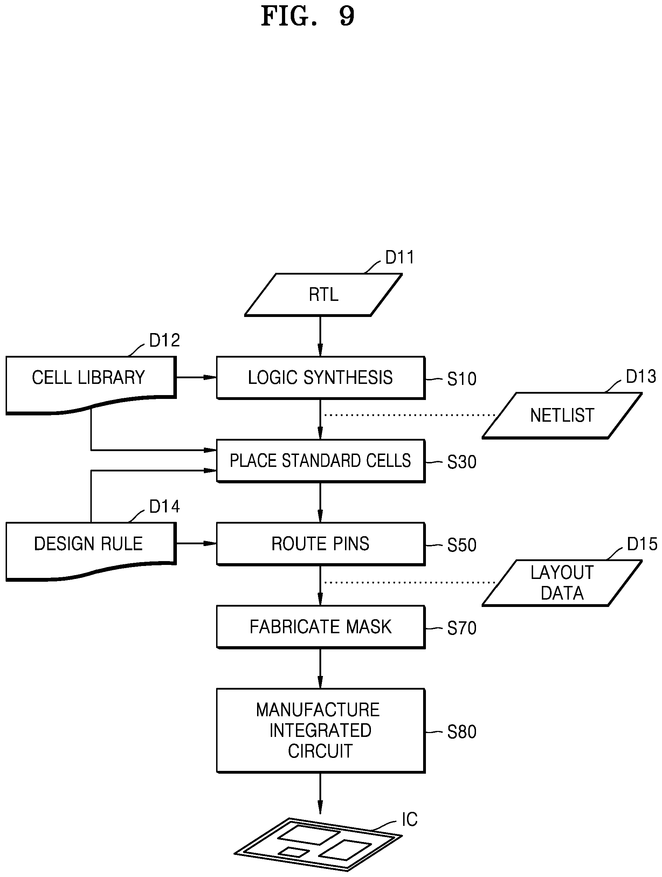

FIG. 9 is a flowchart showing a method of manufacturing an integrated circuit IC, according to an embodiment. For example, the flowchart in FIG. 9 illustrates an example of a method of manufacturing the integrated circuit IC including standard cells. As illustrated in FIG. 9, the method of manufacturing the integrated circuit IC may include a plurality of operations S10, S30, S50, S70, and S80.

A cell library (or a standard cell library) D12 may include information about standard cells, such as information about functions, characteristics, layouts, etc. of the standard cells. For example, the cell library D12 may include information about a low-power consumption cell and a high-power consumption cell.

A design rule D14 may include requirements with which a layout of the integrated circuit IC has to comply. For example, the design rule D14 may include requirements for a space between patterns in a same wiring layer, a minimum width of a pattern, a routing direction in a wiring layer, etc.

In operation S10, logic synthesis may be performed. For example, a logic synthesis operation of generating netlist data D13 from register-transfer level (RTL) data D11 may be performed. For example, a semiconductor design tool (e.g., a logic synthesis tool) may perform logic synthesis by referencing the cell library D12 from the RTL data D11 written as a hardware description language (HDL), such as very high-speed integrated circuit (VHSIC) hardware description language (VHDL) or Verilog, and may generate the netlist data D13 including a bitstream or netlist. The Netlist data D13 may correspond to input of placement and routing (or referred to as P&R) described below.

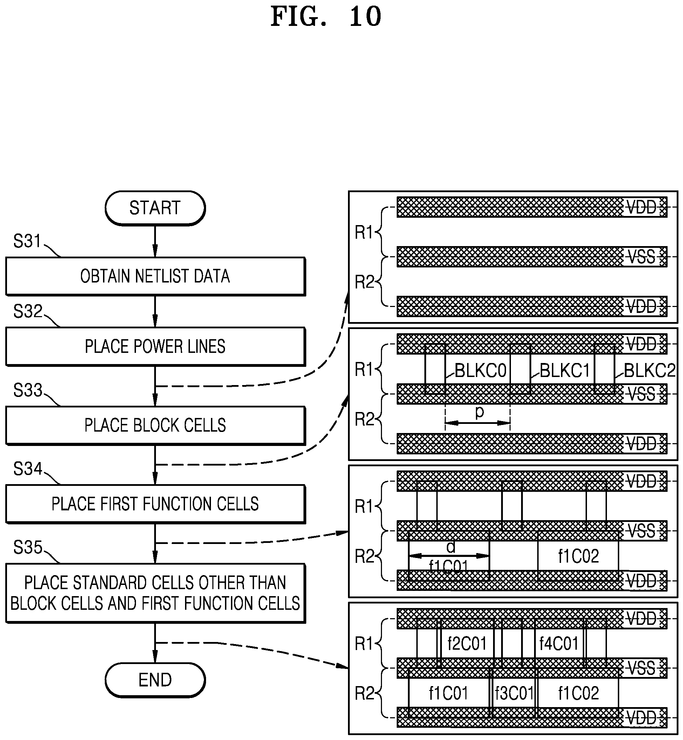

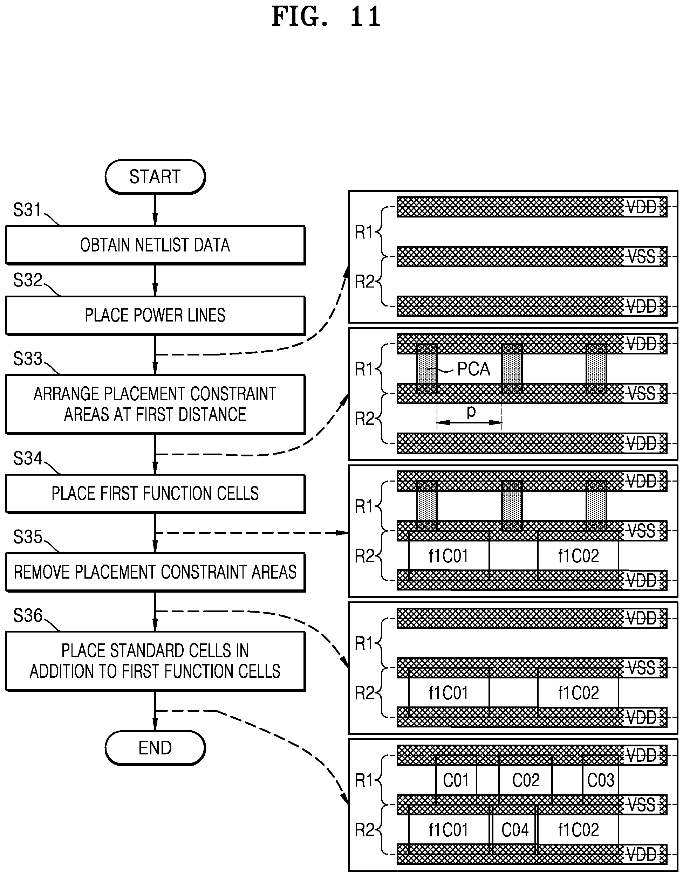

In operation S30, standard cells may be placed. For example, the semiconductor design tool (e.g., a P&R tool) may place the standard cells used in the netlist data D13 on the basis of the cell library D12. An example of operation S30 is described below with reference to FIGS. 10 and 11.

In operation S50, pins may be routed. For example, pins of the cells may be routed. For example, the semiconductor design tool may generate interconnections that electrically connect output pins to input pins in the placed standard cells and my generate layout data D15 that defines the placed standard cells and the generated interconnections. The interconnection may include vias in a via layer and/or patterns in a wiring layer. The layout data D15 may have a format, such as Graphic Data System II (GDSII), and may include geometric information of cells and interconnections. The semiconductor design tool may refer to the design rule D14 while routing the pins of cells. The layout data D15 may correspond to the output of placement and routing. Operation S50 alone or operations S30 and S50 collectively may be referred to as a method of designing the integrated circuit IC. As used herein, the layout data D15 may be referred to as output data.

In operation S70, a mask may be fabricated. For example, an operation of fabricating a mask may be performed. For example, optical proximity correction (OPC) for correcting distortion phenomena, such as refraction caused by the characteristics of light in photolithography, may be applied to the layout data D15. Patterns on a mask may be defined to form patterns placed in a plurality of layers on the basis of data to which the OPC is applied, and at least one mask (or a photomask) may be fabricated to form the patterns of each of the plurality of layers. In some embodiments, the layout of the integrated circuit IC may be limitedly modified in operation S70. The process of limitedly modifying the integrated circuit IC in operation S70 may be referred to as design polishing as a post-processing for optimizing the structure of the integrated circuit IC.

In operation S90, the integrated circuit may be manufactured. For example, an operation of manufacturing the integrated circuit IC may be performed. For example, the integrated circuit IC may be manufactured by patterning the plurality of layers using the at least one mask which has been fabricated in operation S70. The FEOL may include, for example, planarizing and cleaning a wafer, forming a trench, forming a well, forming a gate electrode, and forming a source and drain. By the FEOL, individual devices, such as transistors, capacitors, and resistors, may be formed on a substrate. The BEOL may include silicidating gate, source and drain regions, adding a dielectric, performing planarization, forming holes, adding a metal layer, forming a via, forming a passivation layer, etc. By the BEOL, individual devices, such as transistors, capacitors, and resistors, may be connected to each other. In some embodiments, a middle-of-line (MOL) may be performed between the FEOL and BEOL, and contacts may be formed on the individual devices. Next, the integrated circuit IC may be packaged into a semiconductor package and used as a component in a variety of applications.

FIG. 10 is a flowchart showing a method of manufacturing an integrated circuit, according to an embodiment. For example, the flowchart of FIG. 10 shows an example of operation S30 of FIG. 9.

Referring to FIG. 10, netlist data may be obtained in operation S31. For example, the netlist data may be generated as a result of logic synthesis as described above with reference to FIG. 9. The Netlist data may define standard cells in the integrated circuit and define the connection relationships between the standard cells. As used herein, the netlist data may be referred to as input data.

In operation S32, power lines may be placed. The power lines may extend in the first direction and provide a positive power supply voltage VDD or a negative power supply voltage VSS to the standard cell. For example, the power lines may extend along the boundaries of first and second rows R1 and R2 along which the standard cells are aligned.

In operation S33, block cells BLKC0 to BLKC2 may be placed. For example, in some embodiments, the block cells BLKC0 to BLKC2 may be spaced apart from each other by the distance p in the first row R1.

In operation S34, first function cells f1C01 to f1C02 may be placed. The length of each of the first function cells f1C01 to f1C02 in the first direction may be the length d1, and the length d1 may be greater than the distance p. Therefore, the first function cells f1C01 to f1C02 may be placed in the second row R2. The first function cells f1C01 to f1C02 may include high-power consumption cells.

In operation S35, standard cells f2C01, f3C01, and f4C01, other than the block cells BLKC0 to BLKC2 and first function cells f1C01 to f1C02, may be placed. The standard cells f2C01, f3C01, and f4C01 may be placed in a row among the first and second rows R1 and R2, which is determined according to the length in the first direction, the function of each cell, and the design rule D14.

For convenience of description, operation S35 is described as being performed after operation S34. However, embodiments are not limited thereto. For example, in some embodiments, the standard cells other than the block cells BLKC0 to BLKC2 may be placed in the first and second rows R1 and R2 through a single operation in operation S33. That is, in some embodiments, operation S33 may include placing the block cells BLKC0 to BLKC2 and placing the standard cells other than the block cells BLKC0 to BLKC2. The length d1 of each of the first function cells f1C01 to f1C02 in the first direction is greater than the distance p between the block cells BLKC0 to BLKC2 in the first direction. Accordingly, the first function cells f1C01 to f1C02 may be placed in the second row R2, and the standard cells f2C01, f3C01, and f4C01 may be placed in the row among the first and second rows R1 and R2, which is determined according to the length in the first direction, the function of each cell, and the design rule D14.

In some embodiments, the method of manufacturing the integrated circuit may further include placing multi height cells, which have a length in the first direction that is less than the distance p in the first direction and which are placed across two or more rows. The length of the multi height cells in the first direction is less than the distance p in the first direction, and thus, the multi height cells may be placed across the first and second rows R1 and R2.

In an embodiment, the high-power consumption single height cells are placed in only one of two adjacent rows and not in both of two rows that are adjacent to each other, and thus, the number of high-power consumption cells sharing one power line may be reduced. Accordingly, the limitations related to the voltage drop of power lines may be resolved, and the power integrity and performance of integrated circuit 10 may be improved.

FIG. 11 is a flowchart showing a method of manufacturing an integrated circuit, according to an embodiment. For example, the flowchart of FIG. 11 shows an example of operation S30 of FIG. 9. Descriptions given above with reference to FIG. 10 are omitted for conciseness.

In operation S33, placement constraint areas PCA may be arranged at the first distance. For example, the placement constraint areas PCA may be spaced apart from each other at intervals of the distance p in a first row R1. The placement constraint areas PCA may include a region for restricting the placement of first function cells during some process of placing standard cells and, in some embodiments, may include a region that is not provided in the output data.

In operation S34, first function cells f1C01 to f1C02 may be placed. The length of each of the first function cells f1C01 to f1C02 in the first direction is the length d1, and the length d1 may be greater than the distance p in the first direction. Therefore, the first function cells f1C01 to f1C02 may be placed in the second row R2. The first function cells f1C01 to f1C02 may include high-power consumption cells. In other words, because the placement constraint regions PCA are spaced apart in the first direction by the distance p that is less than the length d1, the first function cells f1C01 to f1C02 may be placed in the second row R2 and prevented from being placed in the first row R1.

In operation S35, the placement constraint areas PCA may be removed. After the placement constraint areas PCA are removed, only the first function cells f1C01 to f1C02 may be placed in the second rows R2.

In operation S36, standard cells C01 to C04 other than the first function cells f1C01 to f1C02 may be placed. The standard cells C01 to C04 may be placed in a row among the first and second rows R1 and R2, which is determined according to the length in the first direction, the function of each cell, and the design rule D14.

For convenience of description, operations S34, S35, and S36 are described as being performed sequentially. However, embodiments are not limited thereto. For example, in some embodiments, operations S34 and S36 may be performed simultaneously. The placement constraint area PCA may restrict the placement of the first function cells f1C01 to f1C02 and may not restrict the placement of other standard cells C01 to C04. Therefore, even if operations S34 and S36 are performed simultaneously, the first function cells f1C01 to f1C02 may be placed in the second row R2 due to the placement constraint area PCA. The standard cells C01 to C04 are not affected by the placement constraint area PCA and may be thus placed in a row among the first and second rows R1 and R2, which is determined according to the length in the first direction, the function of each cell, and the design rule D14.

Furthermore, the method of manufacturing the integrated circuit may further include placing high-power consumption multi height cells having a length in the first direction that is less than the distance p. The high-power consumption multi height cells may receive power from two or more power lines of the same type (e.g., VDD or VSS), and thus, a relatively small voltage drop may occur on one power line. Therefore, the high-power consumption multi height cells may be freely placed without being restricted by the placement constraint area PCA.

In an embodiment, the high-power consumption single height cells are placed in only one of two adjacent rows and not in two rows that are adjacent to each other, and thus, the number of high-power consumption single height cells sharing one power line may be reduced. Accordingly, the limitations related to the voltage drop of power lines may be resolved, and the power integrity and performance of integrated circuit 10 may be improved.

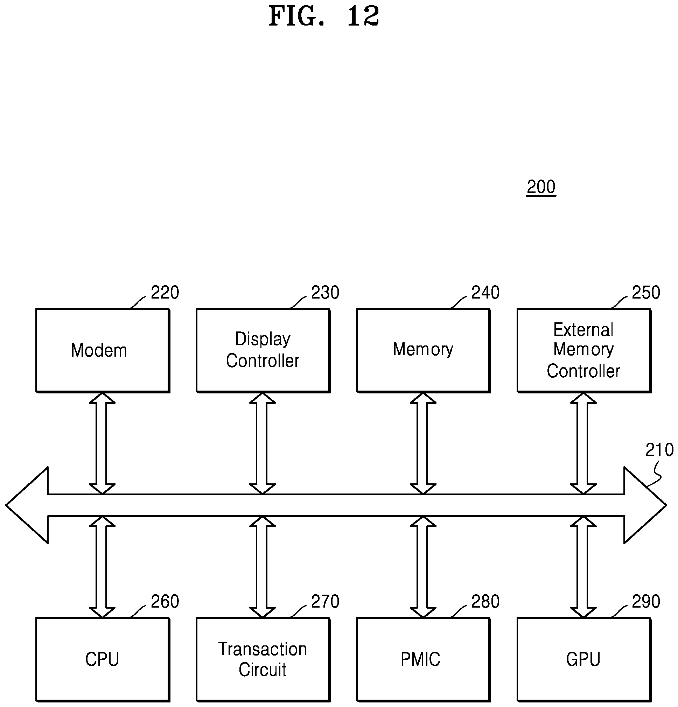

FIG. 12 is a block diagram showing a system-on-chip (SoC) according to an embodiment. A SoC 200 is a semiconductor device and may include the integrated circuit according to embodiments described above. The SoC 200 is configured by mounting, on a single chip, complex blocks, such as intellectual properties (IPs) that perform various functions. The SoC 200 may be designed by the method of designing the integrated circuit according to embodiments described above, and thus, the SoC 200 may have improved power integrity. Referring to FIG. 12, the SoC 200 may include a modem 220, a display controller 230, memory 240, an external memory controller 250, a central processing unit (CPU) 260, a transaction circuit 270, a power management IC (PMIC) 280, and a graphics processing unit (GPU) 290. The function blocks 220 to 290 of the SoC 200 may communicate with each other via a system bus 210.

The CPU 260 capable of controlling the operation of the SoC 200 at the highest level may control the operation of other function blocks 220 to 250 and 270 to 290. The modem 220 may demodulate a signal received from outside the SoC 200 or may modulate a signal generated inside the SoC 200 and transmit the modulated signal to the outside. The external memory controller 250 may control an operation of transmitting and receiving data from an external memory device connected to the SoC 200. For example, programs and/or data stored in the external memory device may be provided to the CPU 260 or GPU 290 under the control by the external memory controller 250. The GPU 290 may execute program instructions related to graphic processing. The GPU 290 may receive graphic data via the external memory controller 250, and the graphic data processed by the GPU 290 may be transmitted to the outside of the SoC 200 via the external memory controller 250. The transaction circuit 270 may monitor data transactions of each function block, and the PMIC 280 may control power supplied to each function block under the control by the transaction circuit 270. The display controller 230 may control a display (or a display device) outside the SoC 200 and transmit data generated inside the SoC 200 to the display. The memory 240 may include non-volatile memory, such as electrically erasable programmable read-only memory (EEPROM) and flash memory, or may include volatile memory, such as dynamic random-access memory (DRAM) and static random-access memory (SRAM). The integrated circuit 10 of FIG. 1 may correspond to one or more of the modem 220, the display controller 230, the memory 240, the external memory controller 250, the CPU 260, the transaction circuit 270, and the GPU 290.

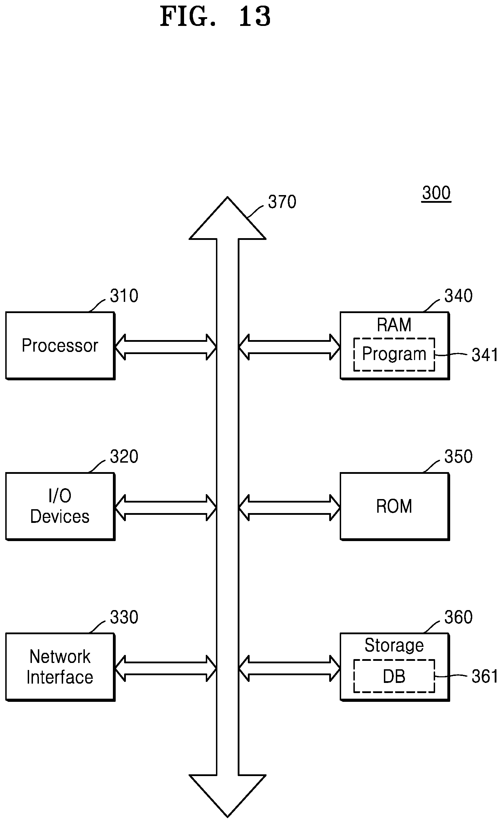

FIG. 13 is a block diagram showing a computing system including memory for storing a program, according to an embodiment. The method of designing the integrated circuit according to embodiments described above, for example, at least some operations of the flowchart described above, may be performed in a computing system (or a computer) 300.

The computing system 300 may include stationary computing systems, such as a desktop computer, a workstation, and a server, or portable computing systems, such as a laptop computer. As illustrated in FIG. 13, the computing system 300 may include a processor 310, input/output (I/O) devices 320, a network interface 330, a random access memory (RAM) 340, a read only memory (ROM) 350, and a storage 360. The processor 310, the input/output devices 320, the network interface 330, the RAM 340, the ROM 350, and storage 360 may be connected to a bus 370 and communicate with each other through the bus 370.

The processor 310 may be referred to as a processing unit and include at least one core, such as a microprocessor, an application processor (AP), a digital signal processor (DSP), and/or a GPU, which may execute any instruction set (e.g., IA-32 (Intel Architecture-32), 64-bit extended IA-32, x86-64, PowerPC, Sparc, MIPS, ARM, IA-64, etc.). For example, the processor 310 may access memory, i.e., the RAM 340 or ROM 350, via the bus 370 and may execute instructions stored in the RAM 340 or ROM 350.

The RAM 340 may store a program 341 for designing the integrated circuit according to embodiments described above or may store at least a portion of the program 341. The program 341 may when accessed and executed by the processor 310 cause the processor 310 to perform at least some operations in the method of designing the integrated circuit, for example, in the methods of FIGS. 9 to 11 according to various embodiments. That is, the program 341 may include a plurality of instructions executable by the processor 310, and the plurality of instructions in the program 341 when executed by the processor 310 may cause the processor 310 to perform at least some operations in the flowcharts described above.

The storage 360 may not lose stored data even if power supplied to the computing system 300 is cut off. For example, the storage 360 may include a non-volatile memory device or may include storage media, such as a magnetic tape, an optical disk, and a magnetic disk. The storage 360 may be detachable from the computing system 300. The storage 360 may store the program 341 according to an embodiment, and the program 341 or at least a portion of the program 341 may be loaded from the storage 360 into the RAM 340 before the program 341 is executed by the processor 310. In some embodiments, the storage 360 may store a file written in a program language, and the program 341 or at least a portion of the program 341 generated from the file by a compiler or the like may be loaded into the RAM 340. In some embodiments, as illustrated in FIG. 13, the storage device 360 may store a database 361, and the database 361 may include information used for designing the integrated circuit, such as information on designed blocks, the cell library D12, and the design rule D14 of FIG. 9.

The storage 360 may store data, which is to be processed by the processor 310, or data, which has been processed by the processor 310. That is, the processor 310 may generate data by processing data stored in the storage 360 according to the program 341 and may also store the generated data in the storage 360. For example, the storage 360 may store the RTL data D11, the netlist data D13, and/or the layout data D15 of FIG. 9.

The input/output (I/O) devices 320 may include input devices, such as a keyboard and a pointing device, and may include output devices, such as a display device and a printer. For example, a user may trigger execution of the program 341 by the processor 310 through the input/output devices 320, input the RTL data D11 and/or the netlist data D13 of FIG. 9, and check the layout data D15 of FIG. 9.

The network interface 330 may provide access to a network outside the computing system 300. For example, the network may include a number of computing systems and communication links. The communication links may include wired links, optical links, wireless links, or any other forms of links.

While various embodiments have been particularly shown and described with reference to the drawings, it will be understood that various changes in form and details may be made therein without departing from the scope of the following claims.

### ANNEX A

The present invention can also be defined by reference to the following clauses:
Clause 1. An integrated circuit comprising:
   a plurality of standard cells;
   a plurality of first power lines extending in a first direction and configured to provide a first power supply voltage to the plurality of standard cells; and
   a plurality of second power lines extending in the first direction and configured to provide a second power supply voltage to the plurality of standard cells, the plurality of first power lines and the plurality of second power lines being interleaved alternately in a second direction that is perpendicular to the first direction to define a plurality of rows between adjacent ones of the plurality of first power lines and the plurality of second power lines,
   wherein the plurality of standard cells comprise a plurality of first function cells,
   wherein the plurality of first function cells are arranged in first rows among the plurality of rows, extend in the first direction, and are configured to perform a first function using the first power supply voltage and the second power supply voltage, and
   wherein other standard cells other than the plurality of first function cells among the plurality of standard cells are arranged in second rows among the plurality of rows.
Clause 2. The integrated circuit of clause 1, wherein the first rows and the second rows alternate in the second direction.
Clause 3. The integrated circuit of clause 1 or clause 2, wherein a length, in the first direction, of each of the other standard cells is less than a length, in the first direction, of each of the plurality of first function cells.
Clause 4. The integrated circuit of any preceding clause, wherein a number of transistors in each of the other standard cells is less than a number of transistors in each of the plurality of first function cells.
Clause 5. The integrated circuit of any preceding clause, wherein each of the plurality of standard cells comprises one or more gate electrodes extending in the second direction, and
   a number of the one or more gate electrodes in each of the other standard cells is less than a number of the one or more gate electrodes in each of the plurality of first function cells.
Clause 6. The integrated circuit of any preceding clause, wherein each of the plurality of first function cells has a first length in the first direction,
   wherein the plurality of standard cells includes standard cells having a second length greater than the first length, and
   the standard cells having the second length among the plurality of standard cells are arranged in the first rows.
Clause 7. The integrated circuit of any preceding clause, wherein each of the plurality of first function cells comprises a first number of transistors,
   wherein the plurality of standard cells include standard cells comprising a second number of transistors greater than the first number, and
   wherein the standard cells comprising the second number of transistors among the plurality of standard cells are arranged in the first rows.
Clause 8. The integrated circuit of any preceding clause, wherein each of the plurality of first function cells comprises a first number of gate electrodes extending in the second direction,
   wherein the plurality of standard cells include standard cells comprising a second number of gate electrodes that is greater than the first number, and
   wherein the standard cells comprising the second number of gate electrodes among the plurality of standard cells are arranged in the first rows.
Clause 9. The integrated circuit of any preceding clause, the plurality of standard cells further comprise a second function cell,
   wherein the second function cell extends in the first direction, is configured to perform the first function using the first power supply voltage and the second power supply voltage, and is arranged across two or more of the plurality of rows,
   wherein each of the plurality of first function cells comprises a single height cell arranged in one of the first rows, and
   wherein the second function cell is arranged across at least one of the second rows.
Clause 10. The integrated circuit of any preceding clause, wherein the plurality of first function cells comprise at least one of a flip-flop cell, a clock gating cell, and a clock buffer cell.
Clause 11. An integrated circuit comprising:
   a plurality of standard cells;
   a plurality of first power lines extending in a first direction and configured to provide a first power supply voltage to the plurality of standard cells; and
   a plurality of second power lines and configured to provide a second power supply voltage to the plurality of standard cells, the plurality of first power lines and the plurality of second power lines being interleaved alternately to define a plurality of first rows and a plurality of second rows between adjacent ones of the plurality of first power lines and the plurality of second power lines, the plurality of first rows alternating with the plurality of second rows,
   wherein the plurality of standard cells comprise first standard cells, each having a length in the first direction that is less than a reference length in the first direction and second standard cells, each having a length greater or equal to the reference length,
   wherein the first standard cells are arranged in the plurality of first rows and the plurality of second rows, and
   wherein the second standard cells are arranged in the plurality of first rows.

## Claims

1. An integrated circuit comprising:
a plurality of standard cells;
a plurality of first power lines extending in a first direction and configured to provide a first power supply voltage to the plurality of standard cells; and
a plurality of second power lines extending in the first direction and configured to provide a second power supply voltage to the plurality of standard cells, the plurality of first power lines and the plurality of second power lines being interleaved alternately in a second direction that is perpendicular to the first direction to define a plurality of rows between adjacent ones of the plurality of first power lines and the plurality of second power lines,
wherein the plurality of standard cells comprise a plurality of first function cells,
wherein the plurality of first function cells are arranged in first rows among the plurality of rows, extend in the first direction, and are configured to perform a first function using the first power supply voltage and the second power supply voltage, and
wherein at least some other standard cells other than the plurality of first function cells among the plurality of standard cells are arranged in second rows among the plurality of rows.

2. The integrated circuit of claim 1, wherein the first rows and the second rows alternate in the second direction.

3. The integrated circuit of claim 1 or claim 2, wherein a length, in the first direction, of each of the at least some other standard cells is less than a length, in the first direction, of each of the plurality of first function cells.

4. The integrated circuit of any preceding claim, wherein a number of transistors in each of the at least some other standard cells is less than a number of transistors in each of the plurality of first function cells.

5. The integrated circuit of any preceding claim, wherein each of the plurality of standard cells comprises one or more gate electrodes extending in the second direction, and
a number of the one or more gate electrodes in each of the at least some other standard cells is less than a number of the one or more gate electrodes in each of the plurality of first function cells.

6. The integrated circuit of any preceding claim, wherein each of the plurality of first function cells has a first length in the first direction,
wherein the plurality of standard cells includes standard cells having a second length in the first direction greater than the first length, and
the standard cells having the second length among the plurality of standard cells are arranged in the first rows.

7. The integrated circuit of any preceding claim, wherein each of the plurality of first function cells comprises a first number of transistors,
wherein the plurality of standard cells include standard cells each comprising a second number of transistors greater than the first number, and
wherein the standard cells each comprising the second number of transistors among the plurality of standard cells are arranged in the first rows.

8. The integrated circuit of any preceding claim, wherein each of the plurality of first function cells comprises a first number of gate electrodes extending in the second direction,
wherein the plurality of standard cells include standard cells each comprising a second number of gate electrodes that is greater than the first number, and
wherein the standard cells each comprising the second number of gate electrodes among the plurality of standard cells are arranged in the first rows.

9. The integrated circuit of any preceding claim, the plurality of standard cells further comprise a second function cell,
wherein the second function cell extends in the first direction, is configured to perform the first function using the first power supply voltage and the second power supply voltage, and is arranged across two or more of the plurality of rows,
wherein each of the plurality of first function cells comprises a single height cell arranged in one of the first rows, and
wherein the second function cell is arranged across at least one of the second rows.

10. The integrated circuit of any preceding claim, wherein the plurality of first function cells comprise at least one of a flip-flop cell, a clock gating cell, and a clock buffer cell.

11. A method of manufacturing an integrated circuit, the method comprising:
obtaining input data defining the integrated circuit, the integrated circuit comprising a plurality of standard cells;
arranging block cells among the plurality of standard cells in first rows among a plurality of rows extending in a first direction, the block cells being spaced apart from each other by a first distance;
arranging first function cells among the plurality of standard cells in second rows among the plurality of rows, each of the first function cells being configured to perform a first function and having a length in the first direction that is greater than or equal to the first distance;
arranging, in the plurality of rows, remaining standard cells other than the block cells and the first function cells among the plurality of standard cells; and
generating output data defining a layout comprising the plurality of standard cells that have been arranged.

12. The method of claim 11, wherein the block cells comprise at least one of decap cells, filler cells, or well tap cells,
wherein arranging the block cells comprises arranging the at least one of decap cells, filler cells, or well tap cells in each of the first rows, and
wherein the at least one of decap cells, filler cells, or well tap cells are spaced apart from each other by the first distance.

13. The method of claim 11 or claim 12, wherein arranging of the remaining standard cells comprises arranging, in the second rows, standard cells having a length in the first direction that is less than the first distance among the standard cells.

14. The method of any of claims 11 to 13, further comprising arranging a second function cell among the plurality of standard cells across at least one of the first rows,
wherein the second function cell is configured to perform the first function and is arranged across two or more rows.

15. An integrated circuit of any of claims 1 to 10,
wherein the plurality of first power lines and the plurality of second power lines are interleaved alternately to define a plurality of the first rows and a plurality of the second rows between adjacent ones of the plurality of first power lines and the plurality of second power lines, the plurality of the first rows alternating with the plurality of the second rows,
wherein the plurality of standard cells comprise first standard cells, each having a length in the first direction that is less than a reference length in the first direction and second standard cells, each having a length greater or equal to the reference length, the first standard cells including the other standard cells and the second standard cells including the first function cells,
wherein the first standard cells are arranged in the plurality of the first rows and the plurality of the second rows, and
wherein the second standard cells are arranged in the plurality of the first rows.
